**Europäisches Patentamt**

**European Patent Office**

**Office européen des brevets**

(19)

(11) Numéro de publication: **0 012 683**
**A1**

(12)

# DEMANDE DE BREVET EUROPEEN

(21) Numéro de dépôt: **79400992.8**

(22) Date de dépôt: **07.12.79**

(51) Int. Cl.³: **B 60 S 3/06**

---

(30) Priorité: **19.12.78 FR 7835683**

(43) Date de publication de la demande: **25.06.80**
**Bulletin 80/13**

(84) Etats contractants désignés: **AT BE CH DE GB IT LU NL SE**

(71) Demandeur: **"SOCIETE INDUSTRIELLE POUR L'EQUIPMENT DES GARAGES"** et par abréviation **"S.I.P.E.G."**, 27 et 29, rue de la Victoire, F-93150 Le Blanc Mesnil (FR)

(72) Inventeur: **Schultz, Serge, 34, rue de Marnes, F-92410 Ville d'Avray (FR)**

(74) Mandataire: **Chameroy, Claude et al, c/o Cabinet Malemont 42, avenue du Président Wilson, F-75116 Paris (FR)**

---

(54) **Appareil de lavage de véhicules.**

(57) Appareil de lavage de véhicules, par exemple des camions, autobus, wagons de métro ou de chemin de fer, du type comprenant au moins une brosse rotative verticale (1, 2), destinée au lavage des flancs du véhicule (V) et dont l'arbre de rotation est prévu oscillant, conformément à l'invention.

L'arbre de rotation de la brosse est constitué d'au moins deux tronçons (11 et 12) articulés l'un par rapport à l'autre et portant chacun une portion de la brosse (1 et 2).

EP 0 012 683 A1

- 1 -

## Appareil de lavage de véhicules

La présente invention concerne un appareil de lavage de véhicules, du type comprenant au moins une brosse rotative verticale, destinée au lavage des flancs du véhicule et dont l'arbre de rotation est prévu oscillant.

De telles brosses, dites oscillantes, sont particulièrement efficaces et sont actuellement largement utilisées pour le lavage des véhicules industriels comme les camions, les autobus ou les wagons de chemin de fer. Elles sont en effet susceptibles d'épouser étroitement le flanc du véhicule, même si celui-ci a un profil incliné. Il faut toutefois que ledit profil soit sensiblement rectiligne et n'ait pas la forme d'une ligne assez fortement brisée, comme par exemple les nouveaux wagons destinés aux métros urbains. Dans ce dernier cas en effet, il est nécessaire d'avoir recours à plusieurs brosses traitant chacune l'une des composantes de la ligne brisée, ce qui augmente évidemment le coût et la complexité de l'installation.

La présente invention a donc pour but principal de remédier à ces inconvénients et, pour ce faire, elle a pour objet un appareil de lavage du type susmentionné qui se caractérise essentiellement en ce que l'arbre de rotation de la brosse est constitué d'au moins deux tronçons articulés l'un par rapport à l'autre et portant chacun une portion de la brosse.

On conçoit aisément que grâce à cette disposition, la brosse peut traiter à elle seule le flanc d'un véhicule ayant un profil en forme de ligne brisée, évitant ainsi la multiplication des brosses.

De préférence, les deux tronçons de l'arbre sont reliés l'un à l'autre au

0012683

- 2 -

moyen d'un accouplement élastique.

Une forme d'exécution de l'invention est décrite ci-après à titre d'exemple, en référence au dessin annexé dans lequel :

La figure 1 est une vue en élévation d'un appareil de lavage conforme à la présente invention ; et,

La figure 2 est une vue simplifiée en perspective de cet appareil en position d'utilisation.

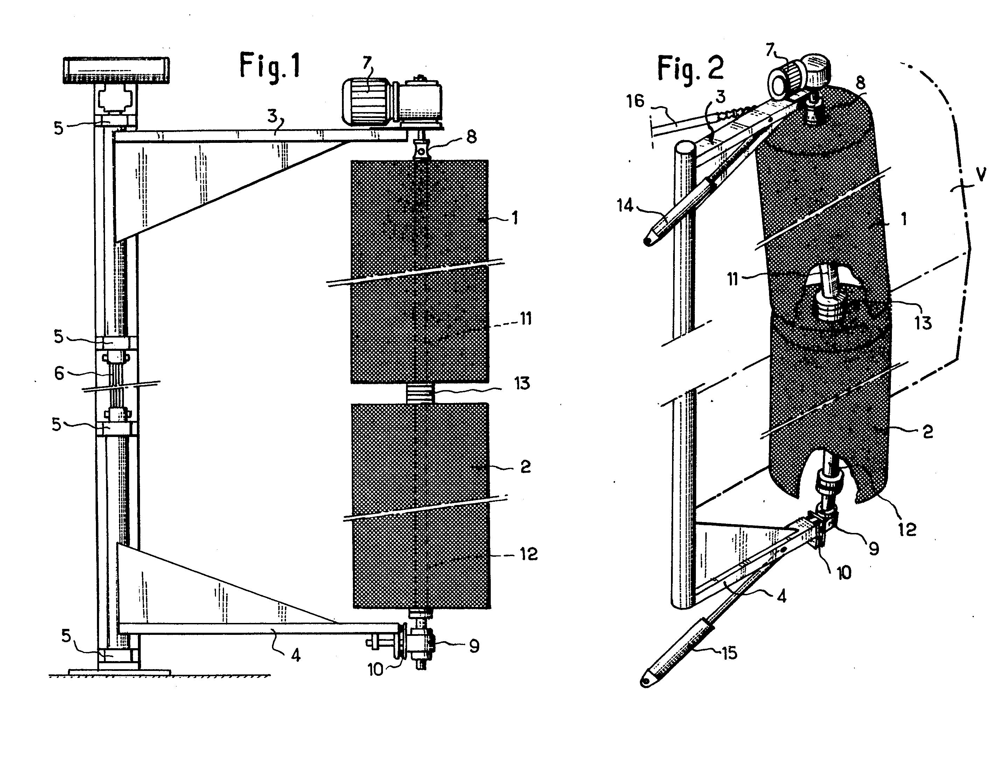

En se référant tout d'abord à la figure 1, on peut voir que l'appareil de lavage selon l'invention se compose essentiellement d'une brosse verticale en deux parties 1 et 2, qui est montée mobile en rotation entre deux bras horizontaux 3 et 4 portés par un pilier vertical 5. Les deux bras 3 et 4 sont supportés à rotation dans les paliers à billes 5 et peuvent ainsi pivoter indépendamment l'un de l'autre autour d'un même axe vertical. Ils sont en outre reliés par une liaison élastique, constituée ici par un empilage de lames de ressort 6. Grâce à cette disposition connue, la brosse 1-2 peut osciller par rapport à la verticale afin d'épouser étroitement le flanc éventuellement incliné du véhicule à laver.

L'entraînement en rotation de la brosse est assuré par un moteur électrique 7 qui est porté par le bras horizontal supérieur 3. Bien entendu, comme la brosse doit pouvoir osciller par rapport à la verticale, il faut prévoir des articulations appropriées entre celle-ci et les bras qui la portent. Ainsi, dans l'exemple particulier décrit ici, le moteur d'entraînement 7 est relié à l'extrémité supérieure de l'arbre de rotation de la brosse par un joint de cadran 8, tandis que l'extrémité inférieure de cet arbre est supportée à rotation dans un palier lisse 9, qui est monté de façon souple sur le bras inférieur 4, par l'intermédiaire de quatre plots élastiques 10.

Conformément à la présente invention, l'arbre de rotation de la brosse est constitué de deux tronçons de tube 11 et 12, articulés l'un par rapport à l'autre au moyen d'un accouplement élastique 13 et portant respectivement la partie supérieure 1 et la partie inférieure 2 de la brosse.

Grâce à cette disposition, et ainsi qu'on peut le voir très clairement sur la figure 2, la brosse peut s'appliquer étroitement contre le flanc d'un véhciule V, même si ce flanc a le profil d'une ligne brisée avec deux parois inclinées différemment.

A cet effet, chacun des bras horizontaux 3 et 4 du cadre oscillant portant la brosse est soumis à l'action d'un vérin pneumatique indépendant, respectivement 14 et 15, permettant ainsi d'équilibrer la résistance opposée aux deux parties de la brosse par les deux faces inclinées du véhicule V. Un détendeur d'air non représenté est en outre prévu à l'entrée de chaque vérin, afin de permettre de régler la force d'application de chacune des parties de la brosse en fonction des différents profils des véhicules à laver. Un amortisseur 16 est par ailleurs monté sur le bras supérieur 3 du cadre oscillant, afin d'éviter que la brosse ne s'engouffre entre deux wagons successifs lorsqu'elle tourne "en avalant".

La brosse articulée selon l'invention peut ainsi traiter sans aucune difficulté et en un seul passage des surfaces concaves ayant jusqu'à 168° d'angle intérieur.

0012683

- 1 -

Revendications de brevet

1. Appareil de lavage de véhicules, du type comprenant au moins une brosse rotative verticale, destiné au lavage des flancs du véhicule et dont l'arbre de rotation est prévu oscillant, caractérisé en ce que ledit arbre est constitué d'au moins deux tronçons articulés l'un par rapport à l'autre et portant chacun une portion de la brosse.

2. Appareil de lavage selon la revendication 1, caractérisé en ce que les deux tronçons de l'arbre sont reliés l'un à l'autre au moyen d'un accouplement élastique .

Fig.1

Fig. 2

0012683

<table>
<tr><td colspan="3" style="text-align:center"><strong>Office européen des brevets</strong><br>RAPPORT DE RECHERCHE EUROPEENNE</td><td>Numero de la demande<br>EP 79 40 09...</td></tr>
</table>

**Office européen des brevets**    **RAPPORT DE RECHERCHE EUROPEENNE**

Numero de la demande: EP 79 40 09..

| DOCUMENTS CONSIDERES COMME PERTINENTS | | | CLASSEMENT DE LA DEMANDE (Int. Cl. ) |
|---|---|---|---|
| Catégorie | Citation du document avec indication, en cas de besoin, des parties pertinentes | Revendication concernee | B 60 S  3... |
| X | <u>US - A - 2 242 692</u> (YINGLING)<br>* Page 2, colonne de droite, lignes 4-25; page 3, colonne de droite, ligne 9-30; figures 2,8 * | 1,2 | |
| X | <u>DE - A - 2 348 899</u> (KLEINDIENST)<br>* Page 5, avant-dernier paragraphe à page 6, paragraph: 1; figure 1 * | 1,2 | |
| | <u>US - A - 3 089 168</u> (BLANFORD)<br>* Colonne 2, lignes 44-54; figures 2,4 * | 1,2 | **DOMAINES TECHNIQUES RECHERCHES (Int. Cl. )**<br><br>B 60 S |
| A | <u>FR - A - 2 284 487</u> (CECCATO) | 1 | |
| A | <u>FR - A - 2 158 933</u> (KRIMM)<br>* Page 12, ligne 11 à page 13; ligne 27; figure 7 * | 1 | |
| A | <u>US - A - 4 021 877</u> (MINER) | 1 | |
| A | <u>US - A - 3 345 666</u> (HANNA) | 1 | **CATEGORIE DES DOCUMENTS CITES** |
| A | <u>US - A - 2 907 063</u> (JONES) | 1 | X: particulièrement pertinent<br>A: arrière-plan technologique<br>O: divulgation non-ecrite<br>P: document intercalaire<br>T: théorie ou principe a la base de l'invention<br>E: demande faisant interférence<br>D: document cité dans la demande<br>L: document cité pour d'autres raisons |
| | Le present rapport de recherche a ete etabli pour toutes les revendications | | &: membre de la même famille, document correspondant |

| Lieu de la recherche | Date d'achevement de la recherche | Examinateur |
|---|---|---|
| La Haye | 07-02-1980 | ESPEEL |

OEB Form 1503.1  06.78